# EUROPEAN PATENT APPLICATION

(11) **EP 4 560 802 A1**
(43) Date of publication of application: **28.05.2025**
(21) Application number: 24207631.3
(22) Date of filing: 18.10.2024
(51) Int. Cl.: H01M 50/204, H01M 50/209, H01M 50/271, H01M 50/289, H01M 50/291, H01M 50/358, H01M 50/367

(54) **BATTERY PACK**

(30) Priority: 27.11.2023 KR 20230166566
(71) Applicant: SAMSUNG SDI CO., LTD., Yongin-si, Gyeonggi-do 17084 (KR)
(72) Inventor: LEE, Kilseok, 17084 Yongin-si (KR); AHN, Byung Kook, 17084 Yongin-si (KR)
(74) Representative: Marks & Clerk LLP

(57) **Abstract**

A battery pack (10) includes a plurality of cell stacks (S) , each including a plurality of battery cells (100) arranged in a first direction (Y), the battery cells including vent units on top surfaces thereof, respectively, a housing frame (200) having an opened top and accommodating the cell stacks, a cover frame (300) covering the opened top of the housing frame, and at least one horizontal frame (400) interposed between the cell stacks and the cover frame, each of the at least one horizontal frame being elongated in the first direction, wherein each of the at least one horizontal frame has a recess that is formed to be recessed downward and elongated in the first direction, and the recess has a plurality of first through-holes arranged in the first direction.

## Description

### BACKGROUND

### 1. Field

Aspects of embodiments of the present disclosure relate to a battery pack.

### 2. Description of Related Art

Unlike primary batteries that are not designed to be recharged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the positive and negative electrodes, and electrode terminals connected to the electrode assembly.

When a thermal runaway or a thermal event occurs in a particular secondary battery cell, an internal pressure of the cell may exceed a threshold range, leading to the expulsion of materials such as flames and gas through a vent unit. In such an event, the high-temperature expelled materials can rapidly spread to the surroundings, causing heat to spread to neighboring cells. Consequently, there is a problem that a thermal runaway or a thermal event may occur in the neighboring cells as well.

The above information disclosed in this Background section is for enhancement of understanding of the background of the present disclosure, and therefore, it may contain information that does not constitute related (or prior) art.

### SUMMARY

Embodiments of the present disclosure provide a battery pack including a horizontal frame that adds rigidity to the battery pack and forms a venting path.

These and other aspects and features of the present disclosure will be described in or will be apparent from the following description of embodiments of the present disclosure.

To solve the above technical problem, a battery pack according to one or more embodiments of the present disclosure may include: a number of cell stacks, each including a number of battery cells arranged in a first direction, the battery cells including vent units on top surfaces thereof, respectively, a housing frame having an opened top and accommodating the cell stacks, a cover frame covering the opened top of the housing frame, and at least one horizontal frame interposed between the cell stacks and the cover frame, each of the at least one horizontal frame being elongated in the first direction, wherein each of the at least one horizontal frame has a recess that is formed to be recessed downward and elongated in the first direction, and the recess has a plurality of first through-holes arranged in the first direction.

According to one embodiment of the present disclosure, the first through-holes may be positioned above the vent units.

According to one embodiment of the present disclosure, a shape of each of the first through-holes may correspond to a shape of each of the vent units.

According to one embodiment of the present disclosure, a first venting path extending in the first direction may be formed in a space formed by the elongated recess of each of the at least one horizontal frame being recessed downward.

According to one embodiment of the present disclosure, a first venting path extending in the first direction may be formed in a space surrounded by the recess of each of the at least one horizontal frame and the cover frame.

According to one embodiment of the present disclosure, each of the at least one horizontal frame may have a protrusion that is formed to protrude upward and extending in the first direction, at least a portion of a top surface of the protrusion may come into contact with the cover frame, and opposite lateral sides of the first venting path may be sealed by the contact of the cover frame with the at least the portion of the top surface of the protrusion.

According to one embodiment of the present disclosure, the protrusion of each of the at least one horizontal frame may have a groove that is recessed downward from the top surface of the protrusion, and the groove may receive an adhesive for bonding the corresponding horizontal frame to the cover frame.

According to one embodiment of the present disclosure, the battery pack may further include: a vent cover elongated in the first direction and between each of the at least one horizontal frame and the cover frame, and the first venting path may be formed in a space surrounded by the recess of the corresponding horizontal frame and the vent cover.

According to one embodiment of the present disclosure, the first through-holes may be closed by the vent units, respectively, to seal a bottom side of the first venting path.

According to one embodiment of the present disclosure, each of the at least one horizontal frame may include one or more ribs that are formed to protrude upward between the first through-holes.

According to one embodiment of the present disclosure, the battery pack may further include: a busbar holder between the cell stacks and the at least one horizontal frame to support a plurality of busbars. The busbar holder may have a number of second through-holes arranged in the first direction. The second through-holes may be positioned above the vent units, respectively, and the first through-holes may be positioned above the second through-holes, respectively.

According to one embodiment of the present disclosure, a first venting path extending in the first direction may be formed in a space formed by the recess being recessed downward, and the first through-holes and the second through-holes may be closed by the vent units, respectively, to seal a bottom side of the first venting path.

According to one embodiment of the present disclosure, the cell stacks may be arranged in the first direction, the housing frame may include a crossbeam between the cell stacks, and may have a second venting path formed therein, and side beams may be positioned on opposite side of the cell stacks and have a third venting path formed therein.

According to one embodiment of the present disclosure, an opening may be formed at a top surface of the crossbeam, at least one of the first through-holes may be positioned above the opening to communicate with the opening, and the opening may be connected to the second venting path.

According to one embodiment of the present disclosure, first coupling holes may be formed at opposite sides of each of the at least one of the first through-holes that is in communication with the opening, second coupling grooves may be formed at opposite sides of the opening, and the corresponding horizontal frame may be fastened to the crossbeam by coupling the first coupling holes and the second coupling grooves with fasteners.

According to one embodiment of the present disclosure, a first venting path extending in the first direction may be formed in a space formed by the recess being recessed downward, and the first venting path and the second venting path may be connected with each other through the opening of the crossbeam.

According to one embodiment of the present disclosure, an opening communicating with the third venting path may be formed at a coupling portion of the side beam where the side beam is coupled with the crossbeam, and the second venting path and the third venting path may communicate with each other through the opening in the side beam.

According to one embodiment of the present disclosure, the side beam may include an outlet port that is in communication with the third venting path and is opened to the outside in response to detecting a pressure exceeding a threshold pressure.

According to one embodiment of the present disclosure, the cover frame may include an outlet port that is in communication with the first venting path and is opened to the outside in response to detecting a pressure exceeding a threshold pressure.

A vehicle including a battery pack according to an embodiment of the present disclosure is provided.

At least some of the above and other features of the invention are set out in the claims.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to some embodiments of the present disclosure, venting material released through a vent unit of a battery cell may be discharged to the outside through a space formed in a frame that reinforces the rigidity of a battery pack without spreading to terminals, busbars, or neighboring battery cells.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view illustrating a battery cell according to one embodiment of the present disclosure.
FIG. 2 is a perspective view illustrating a battery pack according to one embodiment of the present disclosure.
FIG. 3 is an exploded perspective view illustrating a part of the battery pack.
FIG. 4A is a perspective view illustrating each horizontal frame according to one embodiment of the present disclosure.
FIG. 4B is a cross-sectional view taken along a line IVB-IVB' of FIG. 4A
FIG. 4C is an enlarged view of a portion B of FIG. 4A.
FIG. 5A is a cross-sectional view illustrating the horizontal frame applied to the battery pack according to one embodiment of the present disclosure.
FIG. 5B is an enlarged view of a portion C of FIG. 5A.
FIG. 6A is a perspective view illustrating a vent cover interposed between the horizontal frame and the cover frame according to one embodiment of the present disclosure.
FIG. 6B is a cross-sectional view taken along a line VIB-VIB' of FIG. 6A.
FIG. 7 is an exploded perspective view illustrating the busbar holder interposed between the battery cell and the horizontal frame according to one embodiment of the present disclosure.
FIG. 8 is a perspective view illustrating a housing frame according to one embodiment of the present disclosure.
FIGS. 9A is a perspective view illustrating the crossbeam according to one embodiment of the present disclosure.
FIGS. 9B is a side view illustrating the crossbeam according to one embodiment of the present disclosure.
FIG. 9C is an enlarged view of a portion E of FIG. 9A.
FIG. 10 is a diagram illustrating the horizontal frame coupled to the crossbeam according to one embodiment of the present disclosure.
FIG. 11A is a perspective view illustrating the side beam according to one embodiment of the present disclosure.
FIG. 11B is a front view illustrating the side beam according to one embodiment of the present disclosure.
FIG. 11C is a side view illustrating the side beam according to one embodiment of the present disclosure.
FIG. 11D is a partial perspective view illustrating another side of the side beam.
FIG. 12 is diagram illustrating the coupling of the crossbeam with the side beam according to one embodiment of the present disclosure.
FIGS. 13A to 13C are diagrams each illustrating a traveling path of the venting material according to one embodiment of the present disclosure.
FIGS. 14A to 14C are diagrams each illustrating a traveling path of the venting material according to another embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type depending on the shape of battery. As used herein, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but the present disclosure is not limited thereto and the cooling member may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell of the battery or of each battery module. The detection device may detect current flowing through each battery module of the battery module or the battery pack. The detection device may also detect the temperature of a cell and/or module on at least one point of the battery and/or an ambient temperature.

The balancing device may perform a balancing operation of a battery module and/or cells of the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) based on the state information received from the detection device. In addition, based on the monitored state information, the control device may perform a control function (e.g., temperature control, balancing control, charge/discharge control, etc.) and a protection function (e.g., over-discharge, over-charge, over-current protection, short circuit, fire extinguishing function, etc.). In addition, the control device may perform a wired or wireless communication function with an external device of the battery pack (e.g., a higher-level controller or vehicle, charger, power conversion system, etc.).

The control device may control charging/discharging operation and protection operation of the battery. The control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. To prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at at least one location on the entire loop.

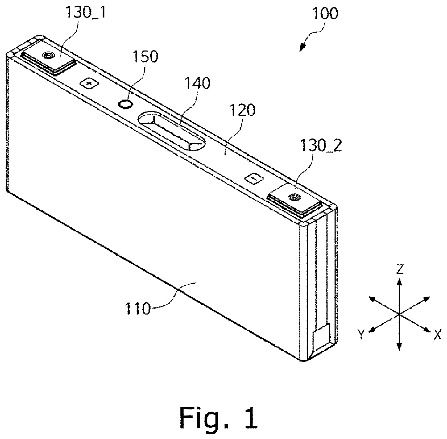

FIG. 1 is a perspective view illustrating an example of a battery cell 100 according to one embodiment of the present disclosure. Referring to FIG. 1, the battery cell 100 may include at least one electrode assembly having a structure in which a positive electrode and a negative electrode are wound with a separator that is an insulator interposed (located) between the positive electrode and the negative electrode, a case 110 housing the electrode assembly, and a cap plate 120 coupled to an opening of the case 110 that is opened at one end of the case 110. The battery cell 100 illustrated in FIG. 1 may be a type of secondary battery.

Each of the positive electrode and the negative electrode may include a current collector made of a thin metal foil having a coated portion on which an active material is coated and an uncoated portion on which an active material is not coated.

The positive electrode and the negative electrode are wound after interposing the separator, which is an insulator, between the positive and negative electrodes. However, the present disclosure is not limited thereto, and the electrode assembly may have a structure in which a positive electrode and a negative electrode, each made of a plurality of sheets, are alternately stacked with a separator interposed the positive and negative electrodes.

The case 110 may form the overall outer appearance of the battery cell 100 and may be made of a conductive metal, such as aluminum, aluminum alloy, or nickel-plated steel. In addition, the case 110 may provide a space in which the electrode assembly is accommodated.

In FIG. 1, it is illustrated that the case 110 is a prismatic case and the battery cell 100 is a prismatic battery cell. However, the scope of the present disclosure is not limited thereto, and the battery cell 100 may be a battery cell formed in a prismatic, cylindrical, or pouch shape, for example.

The cap plate 120 may be coupled to the opening of the case 110 to seal and cover the opening of the case 110. The case 110 and the cap plate 120 may be made of a conductive material. In one embodiment, the case 110 may have an opening at a top side (opened top) thereof, and the cap plate 120 may seal and cover the opening at the top side of the case 110.

A positive electrode terminal 130_1 and a negative electrode terminal 130_2 electrically connected to the positive electrode and the negative electrode, respectively, may be coupled to the cap plate 120. For example, the positive electrode terminal 130_1 and the negative electrode terminal 130_2 may pass through the cap plate 120 and protrude outside the case 110.

In one embodiment, a vent unit 140 may be formed at at least one surface of the battery cell 100 (e.g., the top surface of the battery cell 100, that is, the cap plate 120 in the example shown FIG. 1). The vent unit 140 may be configured to be opened in response to an event in which an internal pressure in the battery cell 100 is detected to be higher than a predetermined threshold pressure.

The threshold pressure may be set differently depending on the application, materials, purpose, and the like of the battery. For example, a relatively high threshold pressure may be set for a battery that is subject to short charge-discharge cycles in use such that the internal pressure of the casing 110 is maintained at a higher pressure on average compared to other applications. In other embodiments, a relatively high threshold pressure may be set for a battery that is manufactured with a material and/or design that has relatively high heat and/or pressure resistance. In contrast, a relatively low threshold pressure may be set for a battery that is manufactured with a material and/or design that has relatively low heat and/or pressure resistance. Additionally or alternatively, the vent unit 140 may be configured to be opened in response to an event where an internal temperature exceeds a predetermined threshold temperature. With such a configuration, the vent unit 140 may prevent an explosion of the battery cell 100 and/or prevent a cascading exothermic reaction of other battery cells arranged around the battery cell 100.

In one embodiment, the cap plate 120 may include an electrolyte inlet port 150. In one or more embodiments, the electrolyte inlet port 150 may be a through-hole formed in the cap plate 120 through which electrolyte solution is injected into the case 110 after the cap plate 120 coupled to the opening of the case 110 seals the opening of the case 110. After the electrolyte is injected, the electrolyte inlet port 150 may be sealed with a sealing member.

The battery cell 100 may include a lithium battery cell, a sodium battery cell, or the like. However, the scope of the present disclosure is not limited thereto, and the battery cell 100 includes any battery capable of repeatedly providing electricity by charging and discharging. In one embodiment where the battery cell 100 is a lithium battery cell, the lithium battery cell may be used in an electric vehicle (EV) due to its relatively long life cycle and high-rate performance. In one or more embodiments, the lithium battery cell can be used in a hybrid vehicle such as a plug-in hybrid electric vehicle (PHEV). Further, the lithium battery cell may be used in applications where a large amount of power storage is required. In one or more embodiments, the lithium battery cell may be used in electric bicycles, power tools, or the like.

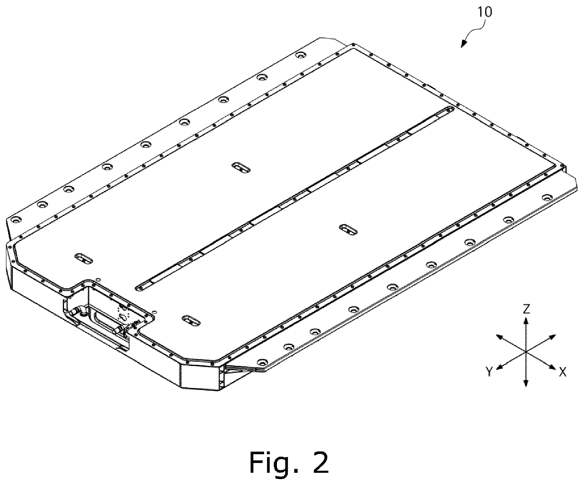

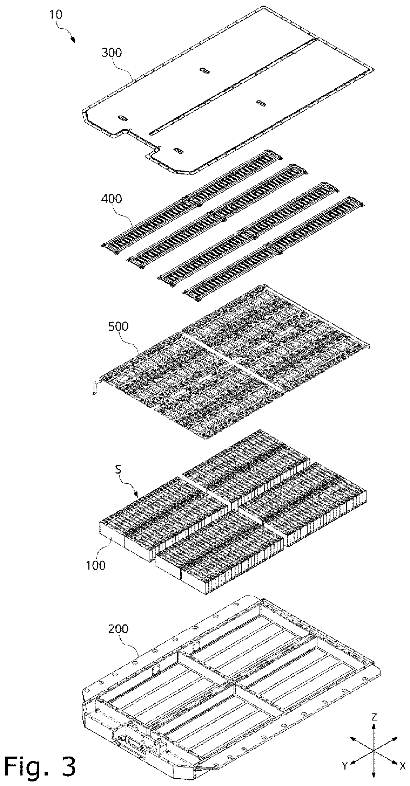

FIG. 2 is a perspective view illustrating a battery pack 10 according to one embodiment of the present disclosure, and FIG. 3 is an exploded perspective view illustrating a part of the battery pack 10.

Referring to FIGS. 2 and 3, the battery pack 10 according to one embodiment of the present disclosure may include a plurality of cell stacks S, a housing frame 200 accommodating the cell stacks S therein, a cover frame 300 covering a top opening (opened top) of the housing frame 200, horizontal frames 400 interposed (located) between the cell stacks S and the cover frame 300, and a busbar holder 500 interposed (located) between the cell stacks S and the horizontal frames 400 to support a plurality of busbars.

Each of the plurality of cell stacks S may include a plurality of battery cells 100. In the cell stack S, the plurality of battery cells 100 may be arranged in one direction (e.g., along the Y-axis direction) such that their wide surfaces face each other. In one embodiment, each of the battery cells 100 may include a vent unit on a top surface thereof. In one or more embodiments, a battery cell illustrated in FIG. 1 may serve as the battery cell 100, but the present disclosure is not limited thereto. The number and arrangement of the cell stacks S and the battery cells 100 are not limited to the configurations shown in FIGS. 2 and 3, and may be appropriately modified as needed.

The plurality of cell stacks S may be accommodated in the housing frame 200. In one or more embodiments, the housing frame 200 may have an opening at the top side thereof (opened top) and include a receiving space for accommodating the plurality of cell stacks S. The housing frame 200 may be constructed of a rigid material to maintain the rigidity of the battery pack 10. In one or more embodiments, the housing frame 200 may be, but is not limited to, an aluminum extrusion, and the housing frame 200 may be constructed of any material suitable for maintaining the rigidity of the battery pack 10.

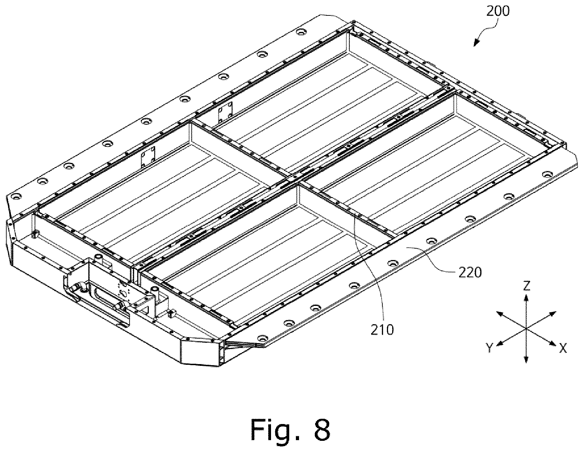

In one embodiment, the housing frame 200 may include a crossbeam and side beams. The crossbeam is interposed (located) between the cell stacks S arranged in one direction (the Y-axis direction in the example of FIGS. 2 and 3), and the side beams are located on opposite side of the plurality of cell stacks S. The details of such a configuration will be described with reference to FIGS. 8 to 12.

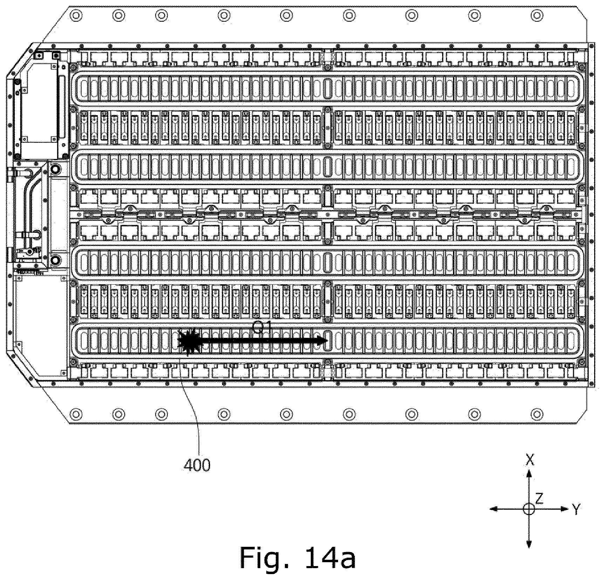

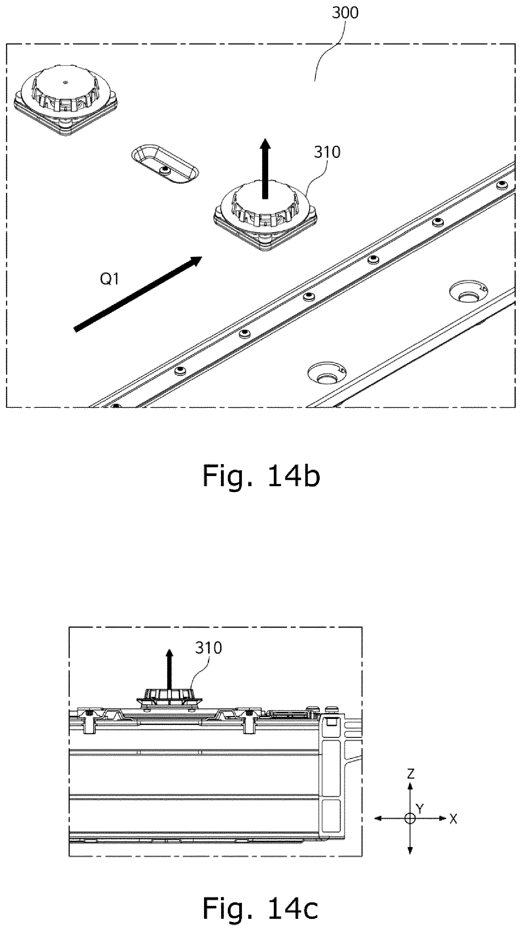

The top opening of the housing frame 200 may be covered by the cover frame 300. In one embodiment, the cover frame 300 may include an outlet port that is opened to the outside in response to detecting a pressure exceeding a threshold pressure. The details of such a configuration will be described with reference to FIG. 14.

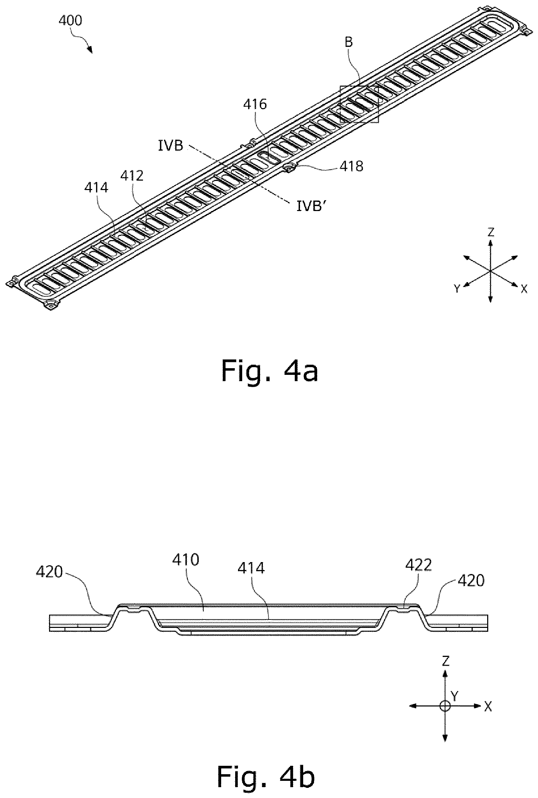

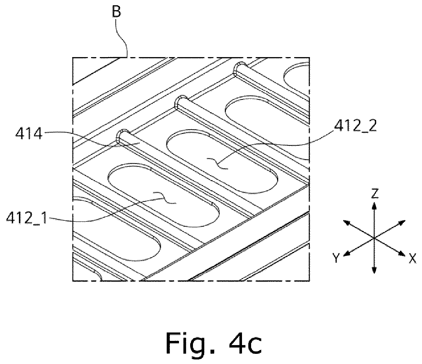

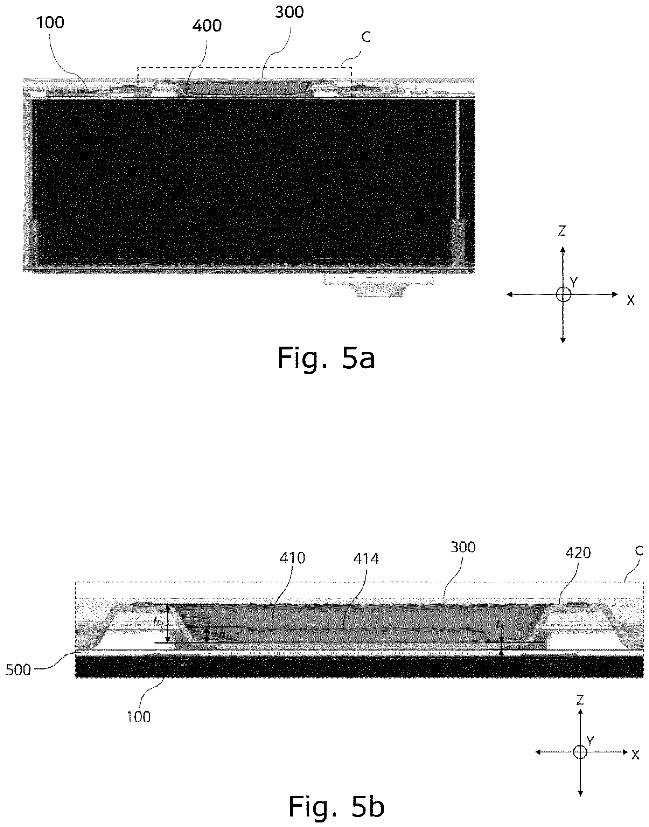

The horizontal frames 400 may be interposed (located) between the cell stacks S and the cover frame 300. In one or more embodiments, the horizontal frames 400 may be disposed (located) above the cell stacks S and below the cover frame 300. Each horizontal frame 400 may provide additional rigidity to the battery pack 10 and have a venting path formed therein. In one or more embodiments, each horizontal frame 400 may include a recess that is formed to be recessed downward and elongated in one direction (e.g., the Y-axis direction shown in the examples of FIGS. 2 and 3). Further, the recess may have a plurality of first through-holes arranged in one direction (e.g., the Y-axis direction shown in the examples of FIGS. 2 and 3). The first through-holes formed in the horizontal frame 400 may be positioned above the vent units of the battery cells 100, respectively. Accordingly, venting material discharged from the vent units of the battery cells 100 may pass through the first through-holes of the horizontal frame 400. Further, a first venting path extending in one direction is formed in a space surrounded by the horizontal frame 400 and the cover frame 300 such that the venting material that has passed through the first through-holes may travel along the first venting path. Accordingly, it is possible to prevent the venting material from spreading to the neighboring cells. The details of such a configuration will be described with reference to FIGS. 4 and 5.

The plurality of battery cells 100 may be electrically connected by busbars. The plurality of battery cells 100 may be electrically connected to each other in series, in parallel, or a combination of in series and in parallel by the busbars to obtain a required electrical output. The busbars may be electrically connected with a protection circuit module. In one or more embodiments, the protection circuit module may be a battery management system (BMS). The protection circuit module may include electronic components and protection circuits.

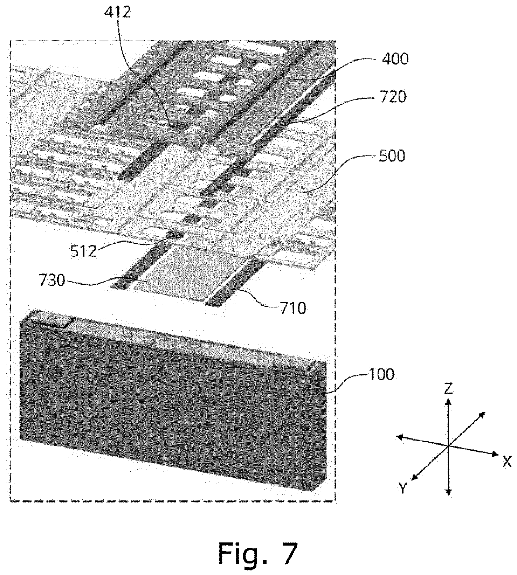

In one embodiment, the battery pack 10 may further include a busbar holder 500 interposed (located) between the cell stacks S and the horizontal frames 400 to support the plurality of busbars. For example, the busbar holder 500 may be disposed at a top portion of the cell stack S and a bottom portion of the horizontal frame 400. In one embodiment, the busbar holder 500 may include a plurality of through-holes formed to correspond to the plurality of first through-holes of the horizontal frame 400. The details of such a configuration will be described with reference to FIG. 7.

The battery pack 10 may be included in a vehicle. In one embodiment, the battery pack 10 may be installed in a vehicle such that top surfaces of the plurality of battery cells 100 and a top surface of the cover frame 300 are arranged to face downward. That is, the vent units of the battery cells 100 are arranged to face downward. In such embodiments, at least some of the terms used in the specification, such as "top (upper) side," "top (upper)," "top surface (upper surface)," and the like may be changed to "bottom (lower) side," "bottom (lower)," "bottom surface (lower surface)," and the like. However, in the present specification, the direction towards the top surfaces of the battery cells 100 including the vent units will be considered as "top side" for the sake of convenience of explanation.

FIG. 4A is a perspective view illustrating each horizontal frame 400 according to one embodiment of the present disclosure, FIG. 4B is a cross-sectional view taken along a line IVB-IVB' of FIG. 4A, and FIG. 4C is an enlarged view of a portion B of FIG. 4A.

Referring to FIGS. 4A to 4C, the horizontal frame 400 may be a frame that is elongated in approximately one direction (for example, a direction of the arrangement of battery cells, that is, the Y-axis direction in the examples of FIGS. 4A to 4C). The horizontal frame 400 may have a recess 410 that is formed to be recessed downward and elongated in one direction (e.g., the Y-axis direction shown in the embodiments of FIGS. 4A to 4C). A first venting path extending in one direction (e.g., the Y-axis direction) may be formed in a space formed by the elongated recess 410 of the horizontal frame 400 being recessed downward.

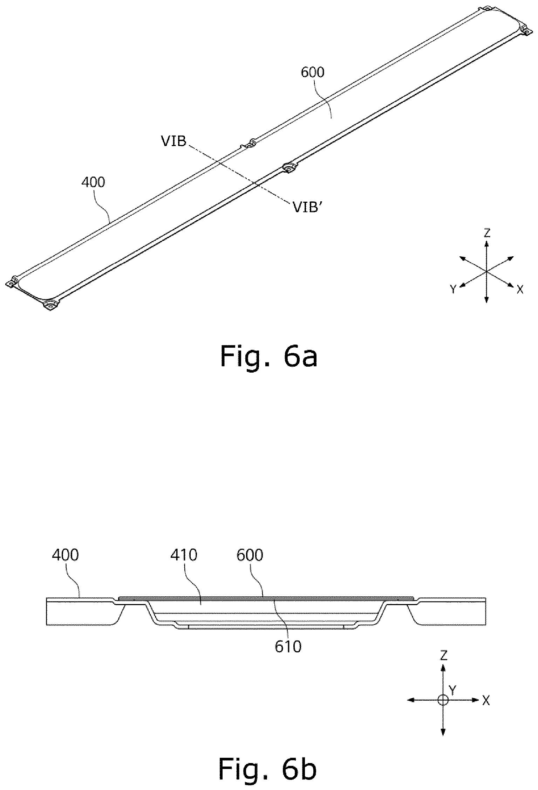

According to one embodiment, in the battery pack 10, a top portion of the recess 410 of the horizontal frame 400 may be covered by the cover frame. Accordingly, the first venting path extending in one direction (e.g., the Y-axis direction) may be formed in a space surrounded by the recess 410 of the horizontal frame 400 and the cover frame. Additionally or alternatively, a vent cover may be interposed (located) between the horizontal frame 400 and the cover frame in the battery pack 10. In such an embodiment, the first venting path may be formed in a space surrounded by the recess 410 of the horizontal frame 400 and the vent cover. The details of such a configuration will be described with reference to FIGS. 6A and 6B.

The recess 410 may have a plurality of first through-holes 412 arranged in one direction (for example, the direction of the arrangement of battery cells, that is, the Y-axis direction in the example of FIGS. 4A to 4C). Each of at least some of the first through-holes 412 formed in the horizontal frame 400 may be positioned above at least one of the vent units of the battery cells. Further, each of at least some of the first through-holes 412 may have a shape corresponding to a shape of each of the vent units of the battery cells. In one or more embodiments, the vent units of the battery cells and at least some of the first through-holes 412 may all have the same or similar shape, such as an oblong shape (e.g., an oval shape or a rounded rectangular shape).

Under normal operating conditions, the bottom side of the first venting path formed in the space surrounded by the recess 410 of the horizontal frame 400 and the cover frame may be sealed by being closed by the vent units of the battery cells. Further, during a thermal event, venting material (e.g., gas, flame, etc.), which is discharged when the vent units of the battery cells are opened, may pass through at least some of the first through-holes 412 of the horizontal frame 400.

The horizontal frame 400 may have a protrusion 420 that is formed to protrude upward while extending in one direction (e.g., the Y-axis direction). For example, the horizontal frame 400 may have the protrusion 420 that protrudes upward to surround the recess 410. The protrusion 420 can enhance the rigidity of the battery pack.

In the battery pack 10, a portion of the protrusion 420 of the horizontal frame 400 may come into contact with the cover frame positioned above the protrusion 420 to seal opposite lateral sides of the first venting path. As a result, during the thermal event, venting material discharged through the vent unit of each battery cell may travel along the first venting path without spreading to the terminals of the battery cell, busbars, or neighboring battery cells. In one embodiment, the protrusion 420 may have a groove 422 that is recessed downward from a top surface of the protrusion 420. The groove 422 may receive (accommodate) an adhesive for bonding the horizontal frame 400 and the cover frame.

In one embodiment, the horizontal frame 400 may further include one or more ribs 414 that are formed to protrude upward between at least some of the first through-holes 412. In one or more embodiments, each of the ribs 414 may be formed between two adjacent first through-holes 412_1 and 412_2, and the rib 414 may be elongated in the X-axis direction and protrude upward in the Z-axis direction. The ribs 414 supplement the rigidity of the horizontal frame 400, preventing (or at least mitigating) the deformation (e.g., bending) of the horizontal frame 400 caused by the high temperature heat that are instantaneously (or nearly instantaneously) generated during the thermal event. Additionally, by providing the ribs 414, venting debris may be sequentially filtered out during the thermal event.

The horizontal frame 400 may be made of a rigid material that is sufficient to withstand high temperatures and high pressures since the horizontal frame 400 reinforces the rigidity of the battery pack and forms a path through which the venting material is discharged. In one or more embodiments, the horizontal frame 400 may include a steel material or an aluminum material. However, the scope of the present disclosure is not limited thereto, and a material of the horizontal frame 400 may be appropriately modified depending on design requirements. In one embodiment, the horizontal frame 400 may be coated with an insulating material for insulation.

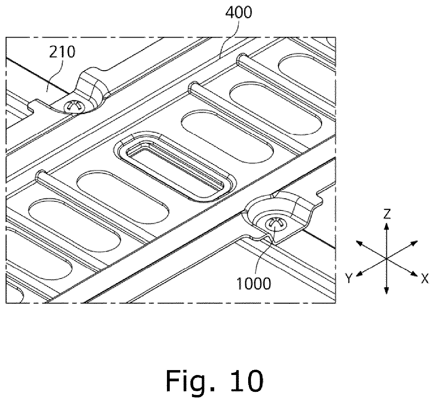

At least one 416 of the first through-holes 412 formed in the horizontal frame 400 may not be positioned above the respective vent units of the battery cells, but instead the one first through-hole 416 may be positioned above an opening of the crossbeam to communicate with the opening of the crossbeam. In addition, first coupling holes 418 may be formed at opposite sides of the first through-hole 416 that communicates with the opening of the crossbeam. By fitting fasteners into the first coupling holes 418, the horizontal frame 400 may be more securely fastened to the crossbeam to prevent separation or bulging under high pressures. The details of such a configuration will be described with reference to FIG. 10.

FIG. 5A is a cross-sectional view illustrating a configuration in which the horizontal frame 400 is applied to the battery pack according to one embodiment of the present disclosure, and FIG. 5B is an enlarged view of a portion C of FIG. 5A.

In one embodiment where the battery pack 10 is installed in a vehicle, top surfaces of the battery cells 100 (the surfaces having the vent units of the battery cells 100) and a top surface of the cover frame 300 may be arranged facing downward. In such embodiments, at least some of the terms used in the specification, such as "top (upper) side," "top (upper)," "top surface (upper surface)," and the like may be changed to "bottom (lower) side," "bottom (lower)," "bottom surface (lower surface)," and the like. Similarly, at least some of the terms used in the specification, such as "bottom (lower) side," "bottom (lower)," "bottom surface (lower surface)," and the like may be changed to "top (upper) side," "top (upper)," "top surface (upper surface)," and the like. However, in the following description referring to FIGS. 5A and 5B, the direction towards the top surfaces of the battery cells 100 will be considered as "top side" for the sake of convenience of explanation.

Referring to FIGS. 5A and 5B, the horizontal frame 400 may be interposed (located) between the battery cell 100 and the cover frame 300. In other words, the horizontal frame 400 may be placed at the top of the battery cell 100 and at the bottom of the cover frame 300.

The battery cell and the top portion of the recess 410 of the horizontal frame 400 may be covered by the cover frame 300. Accordingly, the first venting path extending in one direction (e.g., the Y-axis direction in FIGS. 5A and 5B) may be formed in a space enclosed by the recess 410 of the horizontal frame 400 and the cover frame 300. Further, the portion of the protrusion 420 of the horizontal frame 400 may come into contact with the cover frame 300 positioned above the protrusion 420 to seal opposite lateral sides of the first venting path. As a result, during the thermal event, the venting material discharged through the vent unit of the battery cell 100 may travel along the first venting path without spreading to the terminals of the battery cell 100, busbars, or neighboring cells.

Further, the rigidity of the horizontal frame 400 may be supplemented by the upwardly protruding ribs 414 that are formed in the recess 410 of the horizontal frame 400, thereby preventing (or at least mitigating) the deformation (e.g., bending) of the horizontal frame 400 caused by the high temperature heat that are instantaneously (or nearly instantaneously) generated during the thermal event. In addition, the venting debris may be sequentially filtered out during the thermal event by providing the upwardly protruding ribs 414.

Additionally, in an embodiment where a height of the ribs 414 is excessively high, the venting debris may block the first venting path, obstructing the discharge of the venting gas. Therefore, the height of the ribs 414 may be appropriately designed to complement the rigidity of the horizontal frame 400 and filter out the venting debris while not impeding the discharge of the venting gas. In one or more embodiments, the height hₗ of the ribs 414 may be approximately 10% or more but less than approximately 50% of the height hₜ of the first venting path.

Further, in an embodiment where a cross-sectional area of the first venting path is too narrow, the first venting path may be blocked by the venting debris. Therefore, the cross-sectional area of the first venting path may be appropriately designed so that the venting path is not blocked by the filtered venting debris. In one or more embodiments, the cross-sectional area Aᵥ of the first venting path (e.g., the cross-sectional area obtained by cutting the first venting path in the X-Z plane) may be approximately 50% or more of an area A_{c} of the vent unit of the battery cell 100.

The horizontal frame 400 may be made of a rigid material that can sufficiently withstand high temperatures and high pressures to smoothly discharge a high-temperature venting gas and a venting debris. In one or more embodiments, the horizontal frame 400 may be constructed of a steel material having a thickness tₛ of at least approximately 1 mm or an aluminum material having a thickness tₛ of at least approximately 2 mm (e.g., approximately 2 mm to approximately 3 mm). However, the scope of the present disclosure is not limited thereto, and a material of the horizontal frame 400 may be appropriately modified depending on design requirements. In one embodiment, the horizontal frame 400 may be coated with an insulating material for insulation.

In one embodiment, the busbar holder 500 may be interposed (located) between the battery cell 100 and the horizontal frame 400. The details of such a configuration will be described with reference to FIG. 7.

FIG. 6A is a perspective view illustrating a vent cover 600 interposed (located) between the horizontal frame 400 and the cover frame 300 according to one embodiment of the present disclosure, and FIG. 6B is a cross-sectional view taken along a line VIB-VIB' of FIG. 6A.

The description provided for the horizontal frame 400 shown in FIGS. 4A to 5B can be applied equally and similarly to the horizontal frame 400 shown in FIGS. 6A and 6B. Therefore, in the following description of FIGS. 6A and 6B, the details of the configurations previously described with reference to FIGS. 4A to 5B will be omitted and mainly the different configurations will be described.

Referring to FIGS. 6A and 6B, the vent cover 600 may be on the top of the horizontal frame 400. That is, the vent cover 600 may be interposed (located) between the horizontal frame 400 and the cover frame 300 in the battery pack 10. The vent cover 600 may have a shape elongated approximately in one direction (for example, along a longitudinal direction of the horizontal frame 400, that is, the Y-axis direction in the examples of FIGS. 6A and 6B). The vent cover 600 may cover the top portion of the recess 410 of the horizontal frame 400. Accordingly, the first venting path may be formed in a space surrounded by the recess 410 of the horizontal frame 400 and the vent cover 600. For example, the vent cover 600 may come into contact with a portion of the periphery of the recess 410 of the horizontal frame 400, thereby sealing a top surface and/or opposite lateral sides of the first venting path. In one embodiment, an insulator and a thermal insulating member 610 (e.g., MICA, etc.) may be interposed (located) between the horizontal frame 400 and the vent cover 600.

The horizontal frame 400 and the vent cover 600 may be joined in various ways. In one or more embodiments, the vent cover 600 may be attached to a portion of the periphery of the recess 410 of the horizontal frame 400 by adhesives, by welding (e.g., laser welding, brazing, etc.), by fastening with bolts, and/or other methods.

FIG. 7 is an exploded perspective view illustrating the busbar holder 500 interposed (located) between the battery cell 100 and the horizontal frame 400 according to one embodiment of the present disclosure.

Referring to FIG. 7, the busbar holder 500 may be interposed (located) between the battery cell 100 and the horizontal frame 400. The busbar holder 500 may have a plurality of second through-holes 512 formed (e.g., located and sized) to correspond to the vent unit of the battery cell 100 and the first through-holes 412 of the horizontal frame 400. In one or more embodiments, the busbar holder 500 may have a plurality of second through-holes 512 arranged in one direction (e.g., the direction of the arrangement of battery cells, that is, the Y-axis direction in the examples of FIG. 7). The second through-holes 512 of the busbar holder 500 may be positioned respectively above (e.g., aligned with) the vent units of the battery cells 100, and the first through-holes 412 of the horizontal frame 400 may be positioned respectively above (e.g., aligned with) the second through-holes 512 of the busbar holder 500. In one embodiment, each of the second through-holes 512 may have a shape similar to or the same as the shape of the vent unit of the battery cell 100 and the shape of each of the first through-holes 412 of the horizontal frame 400.

In one embodiment, an adhesive 710 may be interposed (located) between the busbar holder 500 and the battery cell 100. In one or more embodiments, a peripheral portion of each of the second through-holes 512 on the bottom surface of the busbar holder 500 may be bonded to the top surface of a respective one of the battery cells 100 by the adhesive 710. Additionally, an adhesive 720 may be interposed (located) between the horizontal frame 400 and the busbar holder 500. In one or more embodiments, a peripheral portion of each of the first through-holes 412 on the bottom surface of the horizontal frame 400 may be bonded to the top surface of the busbar holder 500 by the adhesive 720.

Accordingly, under the normal operating conditions, the first through-holes 412 of the horizontal frame 400 and the second through-holes 512 of the busbar holder 500 may be closed by the vent units of the battery cells 100, thereby sealing the bottom side of the first venting path formed in the space surrounded by the recess 410 of the horizontal frame 400 and the cover frame 300. Additionally, during the thermal event, venting material (e.g., gas, flame, etc.) released as the vent units of the battery cells 100 are opened may pass through the first through-holes 412 of the horizontal frame 400 and the second through-holes 512 of the busbar holder 500. Further, the peripheral portion of each first through-hole 412 of the horizontal frame 400 is tightly bonded to the busbar holder 500 that is positioned below the horizontal frame 400, and the peripheral portion of each second through-hole 512 of the busbar holder 500 is tightly bonded to the top surface of the battery cell 100 that is positioned below the busbar holder 500. Therefore, the bottom side of the first venting path, except for the first through-holes 412 and the second through-holes 512, may be sealed. Accordingly, the discharged venting material may not flow back, and the venting material may be prevented from spreading to neighboring cells.

In one embodiment, the busbar holder 500 may not be interposed (located) between the battery cells 100 and the horizontal frame 400. In one or more embodiments, an adhesive may be interposed (located) between the top surface of the battery cell 100 and the horizontal frame 400. Accordingly, the top surface of the battery cell 100 and the horizontal frame 400 may be bonded (e.g., directly bonded) to thereby seal the bottom side of the first venting path.

In one embodiment, an insulating member 730 (e.g., MICA, aerogel, etc.) may be interposed (located) between the battery cell 100 and the busbar holder 500 or between the battery cell 100 and the horizontal frame 400 for insulation.

FIG. 8 is a perspective view illustrating a housing frame 200 according to one embodiment of the present disclosure.

The housing frame 200 may include a receiving space for accommodating a plurality of cell stacks S and may have an opening at the top side thereof (opened top). The top opening of the housing frame 200 may be covered by the cover frame 300.

The housing frame 200 may be made of a rigid material to maintain the rigidity of the battery pack 10. For example, the housing frame 200 may be, but is not limited to, an aluminum extrusion. However, the scope of the present disclosure is not limited thereto, and the housing frame 200 may be made of any material suitable for maintaining the rigidity of the battery pack 10.

In one embodiment, the housing frame 200 may include a crossbeam 210 interposed (located) between the cell stacks S arranged in one direction (e.g., the Y-axis direction in the example of FIG. 8) and elongated in another direction (e.g., the X-axis direction in the example of FIG. 8). The crossbeam 210 may reinforce the rigidity of the battery pack 10 while having a second venting path formed therein to communicate with the first venting path.

Further, the housing frame 200 may include side beams 220 positioned on opposite sides of the plurality of cell stacks S (e.g., side beams 220 may be formed at opposite lateral sides of the housing frame 200) and elongated in approximately one direction (e.g., the Y-axis direction in the example of FIG. 8). The side beams 220 may support opposite lateral sides of the plurality of cell stacks S while having a third venting path formed therein to communicate with the second venting path.

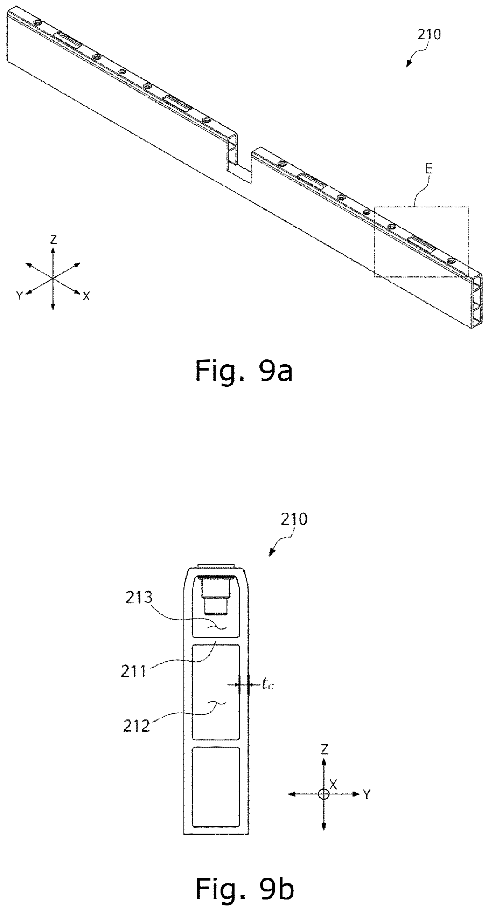

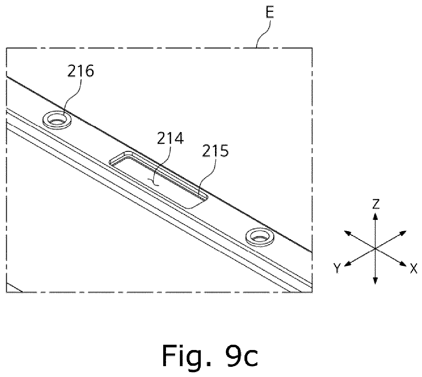

FIGS. 9A and 9B are a perspective view and a side view, respectively, illustrating the crossbeam 210 according to one embodiment of the present disclosure, and FIG. 9C is an enlarged view of a portion E of FIG. 9A.

Referring to FIGS. 9A to 9C, the crossbeam 210 may be elongated in one direction (e.g., the X-axis direction in the example of FIGS. 9A to 9C) and may have the second venting path formed therein.

In one or more embodiments, as shown in FIG. 9B, a hollow cavity or opening may be formed inside the crossbeam 210. In one or more embodiments, an elongated hollow cavity extending from one end to the other end of the crossbeam 210 may be formed in the interior of the crossbeam 210, and the elongated hollow cavity may form the second venting path. In one embodiment, the hollow cavity may be separated into a first hollow cavity 212 and a second hollow cavity 213 by an inner wall 211. Further, one or more through-holes may be formed in the inner wall 211, and the first hollow cavity 212 and the second hollow cavity 213 may communicate with each other through the through-holes formed in the inner wall 211.

In one embodiment, the first hollow cavity 212 and/or the second hollow cavity 213 may form the second venting path.

In one embodiment, one or more openings 214 may be formed at a top surface of the crossbeam 210. The openings 214 of the crossbeam 210 may be in communication with the second venting path. In one or more embodiments, the openings 214 of the crossbeam 210 may communicate with the second hollow cavity 213, and the second hollow cavity 213 may communicate with the first hollow cavity 212 through the through-holes in the interior wall 211 of the crossbeam 210.

One opening 214 of the crossbeam 210 may be in communication with one of the first through-holes 412 of the horizontal frame 400 positioned above the crossbeam 210, thereby allowing the first venting path and the second venting path to be connected. Additionally, a peripheral portion of the opening 214 at the top surface of the crossbeam 210 may be coupled to the horizontal frame 400. In one or more embodiments, a groove 215 may be formed to surround the opening 214 at the top surface of the crossbeam 210, and the groove 215 may receive an adhesive for bonding the crossbeam 210 to the horizontal frame 400. Additionally or alternatively, second coupling grooves 216 may be formed at opposite sides of the opening 214 of the crossbeam 210. By coupling the first coupling holes 418 of the horizontal frame 400 and the second coupling grooves 216 of the crossbeam 210 with fasteners, the horizontal frame 400 may be more securely fastened to the crossbeam 210. The details of such a configuration will be described with reference to FIG. 10.

The crossbeam 210 may be designed to be rigid so as not to be easily deformed by high temperatures and high pressures. In one or more embodiments, the crossbeam 210 may have a thickness t_{c} of approximately 2 mm or more.

FIG. 10 is a diagram illustrating the horizontal frame 400 coupled to the crossbeam 210 according to one embodiment of the present disclosure.

In one embodiment, an adhesive is provided in the groove 215 formed to surround the opening 214 at the top surface of the crossbeam 210. Therefore, a bottom surface of the periphery of the first through-hole 416 of the horizontal frame 400 and a top surface of the periphery of the opening 214 of the crossbeam 210 may be bonded by the adhesive. Additionally or alternatively, first coupling holes 418 are formed at opposite sides of the first through-hole 416 of the horizontal frame 400 that communicates with the opening 214 of the crossbeam 210, and second coupling grooves 216 are formed at opposite sides of the opening 214 of the crossbeam 210. The first coupling holes 418 and the second coupling grooves 216 are coupled with fasteners 1000. In one or more embodiments, the fasteners 1000 may be bolts (e.g., bolts of at least M6). Accordingly, the horizontal frame 400 may be more securely fastened to the crossbeam 210 to prevent separation or bulging under high pressures.

As a result of the coupling of the crossbeam 210 to the horizontal frame 400, at least one of the first through-holes of the horizontal frame 400 communicating with the first venting path may be aligned with the opening at the top surface of the crossbeam 210 communicating with the second venting path. Thus, the first venting path and the second venting path may be connected (e.g., in communication with each other), allowing venting material traveling through the first venting path to flow into the second venting path.

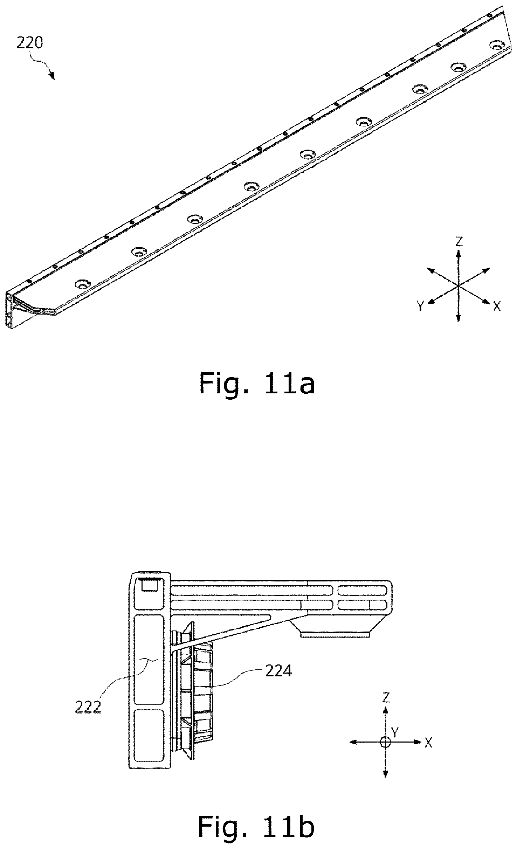

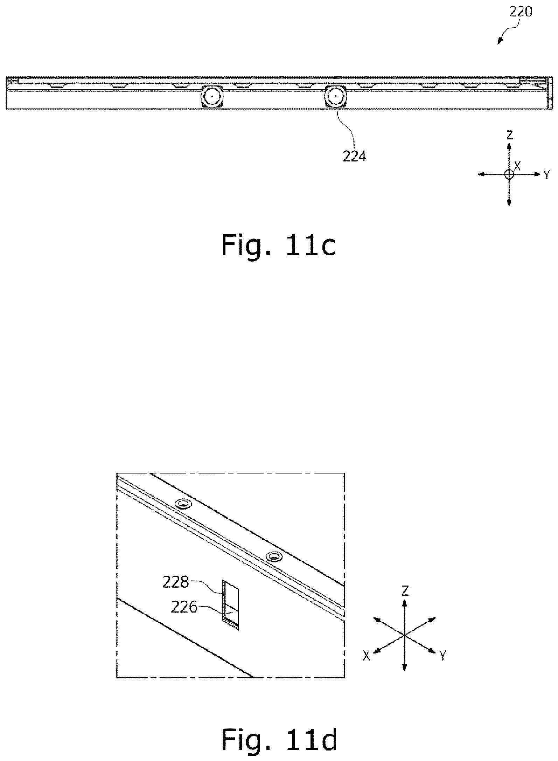

FIGS. 11A, 11B and 11C are a perspective view, a front view, and a side view, respectively, illustrating the side beam 220 according to one embodiment of the present disclosure, and FIG. 11D is a partial perspective view illustrating another side of the side beam 220.

Referring to FIGS. 11A to 11D, the side beam 220 may be elongated in one direction (e.g., the Y-axis direction in the example of FIGS. 11A to 11D) and may have a third venting path formed therein.

In one or more embodiments, as shown in FIG. 11B, a hollow cavity or opening 222 may be formed inside the side beam 220. The hollow cavity 222 extends from one end to the other end of the side beam 220. The hollow 222 may form the third venting path.

At least one surface (e.g., an outer side surface) of the side beam 220 may include an outlet port 224 communicating with the third venting path. The outlet port 224 may be opened to the outside in response to an event where a pressure exceeding a predetermined threshold pressure is detected. Consequently, venting material traveling through the third venting path may be discharged to the outside through the outlet port 224.

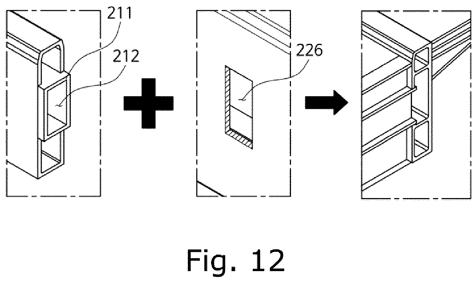

The third venting path may be in communication with the second venting path. In one or more embodiments, an opening 226 communicating with the third venting path may be formed at a coupling portion 228 of the side beam 220 where the side beam 220 is coupled with the crossbeam 210. In one or more embodiments, the opening 226 communicating with the third venting path may be formed at one surface (e.g., an inner side surface) of the side beam 220, and as the crossbeam 210 is coupled with the side beam at the coupling portion 228 surrounding the opening 226, the second venting path (at least one of the hollow cavities) and the third venting path may communicate with each other through the opening 226. Specific embodiments of the coupling of the crossbeam 210 with the side beam 220 are described below with reference to FIG. 12.

FIG. 12 is diagram illustrating the coupling of the crossbeam 210 with the side beam 220 according to one embodiment of the present disclosure. In one embodiment, at an end portion of the crossbeam 210, the inner wall 211 enclosing the first hollow cavity 212 (the second venting path) may extend to protrude in the longitudinal direction of the crossbeam 210. Further, the opening 226 communicating with the third venting path may be formed at one surface (e.g., the inner side surface) of the side beam 220. In one or more embodiments, the protruding portion of the inner wall 211 of the cross beam 210 may extend into (be accommodated in) the opening 226 in the side beam 220. As the protruding portion of the inner wall 211 of the crossbeam 210 is coupled (e.g., by welding, specifically, by CMT welding or MIG/MAG welding) to the coupling portion surrounding the opening 226 of the side beam 220, the second venting path and the third venting path may communicate with each other through the opening 226. Accordingly, the venting material traveling through the second venting path may travel to the third venting path by making an approximately 90° turn at a connection portion of the second venting path and the third venting path.

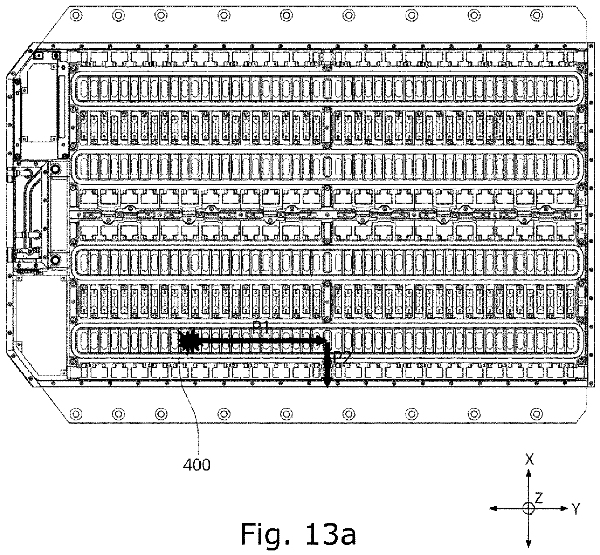

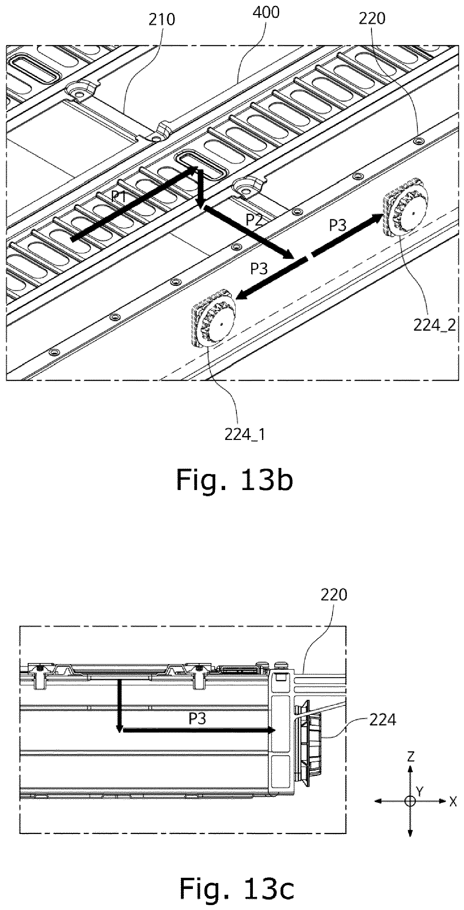

FIGS. 13A to 13C are diagrams each illustrating a traveling path of the venting material according to one embodiment of the present disclosure. Referring to FIGS. 13A to 13C, in response to detecting a pressure exceeding a threshold pressure in a particular battery cell, a vent unit may be opened and venting material inside the battery cell may be discharged through the vent unit. The discharged venting material may travel to a first venting path P1 through a through-hole formed at a recess of the horizontal frame 400 positioned above the battery cell. Then, the venting material may continue to travel along the first venting path P1 toward the crossbeam 210. The venting material moved to the crossbeam 210 may continue to travel to a second venting path P2 inside the crossbeam 210 through an opening of the crossbeam 210. Then, the venting material may continue to travel along the second venting path P2 toward the side beam 220. The venting material moved to the side beam 220 may continue to travel to a third venting path P3 inside the side beam 220 through an opening of the side beam 220. The venting material moved along the third venting path P3 may be discharged to the outside through the outlet port 224 of the side beam 220, which is opened to the outside in response to detecting a pressure exceeding the threshold pressure.

FIGS. 14A to 14C are diagrams each illustrating a traveling path of the venting material according to another embodiment of the present disclosure. Referring to FIGS. 14A to 14C, in response to detecting a pressure exceeding a threshold pressure in a particular battery cell, a vent unit may be opened and venting material inside the battery cell may be discharged through the vent unit. The discharged venting material may travel to a first venting path Q1 through a through-hole formed at a recess of the horizontal frame 400 positioned above the battery cell.

In one embodiment, the cover frame 300 may include an outlet port 310 that is opened to the outside in response to detecting a pressure exceeding a threshold pressure. The outlet port 310 of the cover frame 300 may communicate with the first venting path Q1. The venting material traveling along the first venting path Q1 may be discharged to the outside through the outlet port 310 of the cover frame 300, which is opened to the outside as the pressure exceeding the threshold pressure is detected.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

## Claims

1. A battery pack (10) comprising:
a plurality of cell stacks (S), each of the plurality of cell stacks (S) comprising a plurality of battery cells (100) arranged in a first direction, the plurality of battery cells (100) comprising vent units (140) on top surfaces thereof;
a housing frame (200) comprising an opened top and accommodating the plurality of cell stacks (S);
a cover frame (300) covering the opened top of the housing frame (200); and
at least one horizontal frame (400) between the plurality of cell stacks (S) and the cover frame (300), each of the at least one horizontal frame (400) being elongated in the first direction,
wherein each of the at least one horizontal frame (400) comprises a recess (410) that is recessed downward and elongated in the first direction, and
wherein the recess (410) comprises a plurality of first through-holes (412) arranged in the first direction.

2. The battery pack (10) as claimed in claim 1, wherein the plurality of first through-holes (412) is positioned above the vent units (140).

3. The battery pack (10) as claimed in claim 1 or 2, wherein a first venting path (P1, Q1) extending in the first direction is in a space formed by the recess (410) of each of the at least one horizontal frame (400).

4. The battery pack (10) as claimed in claim 1 or 2, wherein a first venting path (P1, Q1) extending in the first direction is formed in a space surrounded by the recess (410) of each of the at least one horizontal frame (400) and the cover frame (300).

5. The battery pack (10) as claimed in claim 4, wherein each of the at least one horizontal frame (400) comprises a protrusion (420) protruding upward and extending in the first direction,
wherein at least a portion of a top surface of the protrusion (420) contacts the cover frame (300), and
wherein opposite lateral sides of the first venting path (P1, Q1) are sealed by the contact of the cover frame (300) with the at least the portion of the top surface of the protrusion (420).

6. The battery pack (10) as claimed in claim 3, further comprising:
a vent cover (600) elongated in the first direction and located between each of the at least one horizontal frame (400) and the cover frame (300),
wherein the first venting path (P1, Q1) is formed in a space surrounded by the recess (410) of the at least one horizontal frame (400) and the vent cover (600).

7. The battery pack (10) as claimed in claim 3 or 6, wherein the plurality of first through-holes (412) are closed by the vent units (140) to seal a bottom side of the first venting path (P1, Q1).

8. The battery pack (10) as claimed in any preceding claim, wherein each of the at least one horizontal frame (400) comprises one or more ribs (414) protruding upward between adjacent first through-holes (412_1, 412_2) of the plurality of first through-holes (412).

9. The battery pack (10) as claimed in any preceding claim, wherein the plurality of cell stacks (S) is arranged in the first direction,
wherein the housing frame (200) comprises a crossbeam (210) between the plurality of cell stacks (S), the crossbeam (210) comprising a second venting path (P2), and
wherein side beams (220) positioned on opposite side of the plurality of cell stacks (S) each comprise a third venting path (P3).

10. The battery pack (10) as claimed in claim 9, wherein an opening (214) is at a top surface of the crossbeam (210),
wherein at least one of the plurality first through-holes (412) is positioned above the opening (214) to communicate with the opening (214), and
wherein the opening (214) is connected to the second venting path (P2).

11. The battery pack (10) as claimed in claim 10, wherein first coupling holes (418) are at opposite sides of each of the at least one of the plurality of first through-holes (412) that is in communication with the opening (214),
wherein second coupling grooves (216) are at opposite sides of the opening (214), and
wherein the at least one horizontal frame (400) is fastened to the crossbeam (210) with fasteners (1000) extending through the first coupling holes (418) and the second coupling grooves (216).

12. The battery pack (10) as claimed in claim 10 when dependent on claim 9 when dependent on claim 1 or 2, wherein a first venting path (P1) extending in the first direction is in a space formed by the recess (410) being recessed downward, and
wherein the first venting path (P1) and the second venting path (P2) are in communication with each other through the opening (214) of the crossbeam (210).

13. The battery pack (10) as claimed in claim 12, wherein an opening (226) communicating with the third venting path (P3) is at a coupling portion of each of the side beams (220) where the side beams (220) are coupled with the crossbeam (210), and
wherein the second venting path (P2) and the third venting path (P3) communicate with each other through the opening (226) in the each of the side beams (220).

14. The battery pack (10) as claimed in claim 9 or any claim dependent on claim 9, wherein at least one of the side beams (220) comprises an outlet port (224) that is in communication with the third venting path (P3) and is configured to open to an outside in response to a pressure exceeding a threshold pressure.

15. The battery pack (10) as claimed in claim 3 or any claim dependent on claim 3, wherein the cover frame (300) comprises an outlet port (310) that is in communication with the first venting path (Q1) and is configured to open to an outside in response to a pressure exceeding a threshold pressure.
